# NEW EUROPEAN PATENT SPECIFICATION

(11) **EP 0 924 655 B2**
(45) Date of publication and mention of the opposition decision: **29.08.2007**
(45) Mention of the grant of the patent: 04.06.2003
(21) Application number: 98120627.9
(22) Date of filing: 02.11.1998
(51) Int. Cl.: G07C 9/00, G07F 7/10

(54) **Controlled access to doors and machines using fingerprint matching**
Durch Fingerabdruckvergleich kontrollierter Zugang zu Türen und Maschinen
Contrôle d'accès à des portes ou à des machines à l'aide de comparaisons d'empreintes digitales

(30) Priority: 22.12.1997 US 995328
(43) Date of publication of application: 23.06.1999
(73) Proprietor: TRW INC., Redondo Beach, California 90278 (US)
(72) Inventor: Hsu, Shi-Ping, Pasadena, CA 91107 (US); Evans, Bruce W., Redondo Beach, CA 90277 (US); Messenger, Arthur F., Redondo Beach, CA 90278 (US); Zsolnay, Denes L., Rolling Hills Estates, CA 90274 (US)
(74) Representative: Schmidt, Steffen J.

(56) References cited:
- EP-A- 0 393 784
- EP-A1- 0 244 498
- EP-A1- 0 393 784
- WO-A-93/18486
- US-A- 4 805 223
- US-A- 4 995 086
- "Fingerabdruck wird zum Schlüssel", VDI Nachrichten 22.01.1993, Seite 13

## Description

### BACKGROUND OF THE INVENTION

This invention relates generally to personal identification or verification systems and, more particularly, to systems that automatically verify a person's identity before granting access to a secured area of a company building, or to a secured machine of some kind, such as a bank automatic teller machine (ATM). For building access, employees are typically required to wear or carry identification badges, which are either inspected by security guards or are read by machines installed at access doors. Access to some areas of buildings may also require the employee to key in a lock combination, or supply a secret password.

Access to an ATM also requires an identification card, which is scanned by the machine to determine the identity of the customer who was issued the card. In an effort to ensure that the person presenting the card is the customer to whom it was issued, a personal identification number (PIN) must also be entered into the machine. Access to highly secured computer systems presents similar problems and usually requires some form of identification used in conjunction with a secret code number or password.

The principal weakness of systems of the general type described above is that identification cards may be lost or stolen, and secret codes may be stolen, guessed or determined by trial and error. Accordingly, there has been a trend toward systems that obviate the need to carry identification cards or to memorize secret codes or passwords.

Fingerprint matching falls into this category and has been used or proposed for building access, but has not been widely adopted because of the need for relatively expensive computer equipment to perform the matching process to a desired level of precision. In the past, fingerprint matching systems have been relatively slow. Even with the availability of high-speed computer processors, a fingerprint matching system that must compare a sensed fingerprint image with many possible stored reference images will not operate fast enough to provide rapid access to a building.

Accordingly, the need still exists for a system of building and machine access that avoids the pitfalls of the prior art techniques. The present invention satisfies this need.

US-4,995,086 discloses an arrangement and procedure for determining the authorization of individuals by verifying their fingerprints. In particular, a portable data carrier is used which stores fingerprint data of a user of the data carrier. Means for storing fingerprint data of several user are explicitly avoided. As a result, for verifying the authorization of an individual, respective fingerprint data are retrieved from the portable data carrier only and compared with fingerprint data obtained by means of a fingerprint sensor.

EP 0 393 784 A1 discloses a multifunctional identification and information card and a system to be used therewith for exchanging a data with a data acquisition system. The use of fingerprint data and the like are not disclosed therein.

### SUMMARY OF THE INVENTION

The present invention resides in a combination of fingerprint matching and a carried form of personal identification, for access to buildings or machines such as automatic teller machines (ATMs). Briefly, and in general terms, the system of the invention comprises means for inputting a preliminary identification of a user of the system; a fingerprint database containing reference fingerprint data for every user of the system, in association with an identification of the user; means for retrieving from the fingerprint database reference fingerprint data corresponding to the preliminary identification of the user; a fingerprint sensor for generating a fingerprint image of the user prior to granting access; and a fingerprint correlator for comparing the subject fingerprint image with the retrieved reference fingerprint data, and generating a match signal if there is a match to within a desired degree of accuracy. The match signal is used to grant the user access to the door or machine.

In one embodiment of the invention, the means for inputting a preliminary identification includes means for reading an identification medium carried by each user and having a transponder capable of transmitting identification data in response to receipt of a polling signal; and a polling transceiver for sending polling signals periodically and receiving any response signals from a transponder carried by a user approaching the secured building or machine. In another embodiment, the identification medium carried by each user includes a machine readable card; and the means for reading the identification medium includes a card reader capable of reading the machine readable card to extract preliminary identification data.

As used to provide access to a secured building, the system further comprises a door release actuator triggered by the match signal. Preferably, the fingerprint sensor is integrated into the door for convenience of use.

As used to provide access to a bank automatic teller machine (ATM), the system's means for reading an identification medium includes a bank card reader integral with the ATM. The fingerprint sensor is also integrated into the ATM.

The invention may also be defined in terms of a method for controlling access to a secured building or machine, comprising the steps of reading preliminary identification data supplied by a user seeking access; sensing the user's fingerprint prior to granting access, and generating a fingerprint image; retrieving from a fingerprint database reference fingerprint data corresponding to the preliminary identification data; comparing the reference fingerprint data with the subject fingerprint image to verify the preliminary identification data and, if there is match, generating a match signal; and granting access to the secured building or machine if a match signal is generated.

In a preferred form of the method, the identification medium carried by each user includes a transponder, and the step of reading preliminary identification data includes transmitting a polling signal, receiving the polling signal in the transponder, and transmitting from the transponder a reply that includes user identification data. In an alternative form of the method, the identification medium carried by each user includes a machine-readable card, and the step of reading data from an identification medium includes reading data from a card reader in which the machine-readable card is placed by the user. If the machine-readable card is a "smart card," it may hold its own reference fingerprint data as well as preliminary identification data.

As used to provide access to a protected building, the method of granting access includes unlocking a door to the building, and the step of sensing the user's fingerprint is performed by a sensor integrated into the door for convenience of use. As used to provide access to a machine, the method step of reading data from an identification medium includes reading an identity card in the machine.

It will be appreciated from the foregoing summary that the present invention represents a significant advance in techniques for controlling access to secured buildings and machines. In particular, the invention provides a high level of security because of its use of fingerprint matching, but does not sacrifice speed or convenience of operation because preliminary identification is provided by the user and fingerprint matching can, therefore, be achieved rapidly. In the preferred form of the invention as used for building access, the combination of fingerprint matching and radiofrequency identification transponders allows users to pass rapidly through a controlled door by simply placing a finger momentarily on a sensor that can be integrated into the door structure. Other aspects and advantages of the invention will become apparent from the following more detailed description, taken in conjunction with the accompanying drawings.

### BRIEF DESCRIPTION OF THE DRAWINGS

FIG. 1 is diagrammatic view showing one technique for obtaining access to a secured building in accordance with the present invention;
FIG. 2 is a block diagram showing the principal components of the invention as used in the technique shown in FIG. 1;
FIG. 3 is a block diagram similar to FIG. 2, but as used for access to an automatic teller machine (ATM) or other machine; and
FIG. 4 is a block diagram showing a fingerprint enrollment process as used in either of the systems of FIGS. 2 and 3.

### DESCRIPTION OF THE PREFERRED EMBODIMENTS

As shown in the drawings for purposes of illustration, the present invention pertains to a system for controlling access to secured building or machines. In the past, the use of identification cards or badges, in possible combination with secret codes or passwords, has not been reliable because of the possibility of theft of the cards and codes.

In accordance with the present invention, a high-speed fingerprint matching device is used in conjunction with a personal identification medium carried by each user seeking access to a building or machine. The personal identification medium provides a preliminary identity of the user and the fingerprint matching device provides rapid verification or confirmation of the identity.

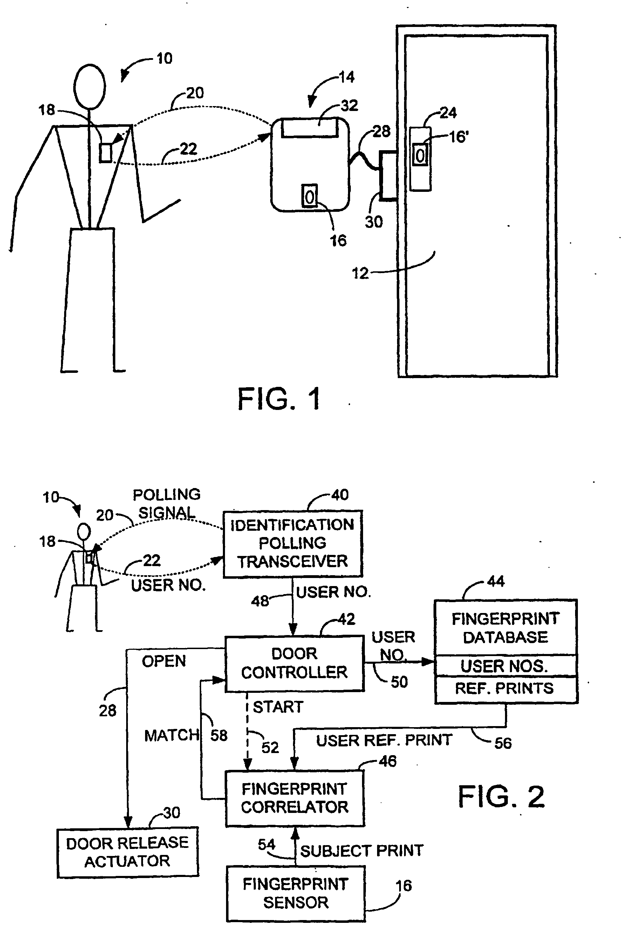

FIG. 1 shows a user, indicated by reference numeral 10, approaching a door 12 to a secured building. An access control unit 14 is installed near the door 12 and includes an integral fingerprint sensor 16. The user 10 is shown wearing an identification badge 18. In accordance with a preferred embodiment of the invention, the access control unit 14 transmits polling signals, indicated by line 20, and the badge 18 includes an integral transponder, which receives the polling signals and transmits a response that includes a coded employee number or, more generally, a user number, as indicated by line 22.

When the user 10 reaches the door, he or she places a finger on the fingerprint sensor 16. An alternative location for the sensor is, as indicated at 16', integral a push plate 24 on an inwardly opening door, or beneath a pull handle (not shown) on an outwardly opening door. The user has only to pause a fraction of a second while fingerprint verification takes place. Then the access control unit 14 sends a control signal over line 28 to a door release actuator 30, which unlocks the door 12 and allows the user 10 to enter. The access control unit 14 also includes an integral card reader 32, for use by those that do not have a transponder badge 28, or whose badge is not working for some reason. Transponder badge technology, sometimes known as RF-ID (radio- frequency identification), has been discussed in the technical literature.

An alternative to the use of a badge 28 is to have each user 10 enter an identification code in a keypad (not shown) near the door 12. The preliminary identification is, in effect, memorized and supplied by the user 10 instead of being stored in the badge 28. Verification is still performed by fingerprint matching.

FIG. 2 shows the principal components of the access control unit 14 in block diagram form, including an identification polling transceiver 40, a door controller 42, a fingerprint database 44, and a fingerprint correlator 46. The polling transceiver 40 continually transmits polling signals, indicated by line 20. As the user 10 approaches, his or her badge 18 detects the polling signal and transmits a reply signal that includes the user's identification number or user number, as indicated by line 22. The user number is forwarded to the door controller 42, over line 48, and, as indicated by line 50, is used to access the fingerprint database 44. The database is basically a table that associates each user number with a stored fingerprint image, or with selected distinctive attributes or features of the user's fingerprint image. The database may also contain other information about the user, such as a history of access to the door 12, but only the user's stored fingerprint image is of concern to the invention. In case multiple users approach the door simultaneously, means must be provided to prevent interference between the signals from each transponder, and to select the fingerprint of the person who will next try to enter the door 12. This can be achieved simply by limiting the transmitted signal strength of the polling transceiver 40 and badge transponders 18, so that the exchange of signals between transponder and transceiver occurs only when they are in close proximity. Alternatively or additionally, standard signal multiplexing techniques (based on time, frequency or modulation diversity) could be used to eliminate interference, and the strength of the transponder signal received at the transceiver could be used to select the closest transponder.

At about the same time that the door controller 42 retrieves a reference fingerprint from the database 44, the controller also issues a "start" command to the fingerprint correlator 46, as indicated by line 52. The fingerprint sensor 16 is activated and scans the user's fingerprint. The correlator 46 then rapidly compares the subject fingerprint from the sensor 16, received over line 54, with the reference fingerprint features received from the database 44 over line 56. If the correlator 46 determines that there is a match, a match signal is transmitted to the door controller 42 over line 58, and the controller generates an "open" signal on line 28 to the door release actuator 30.

Like most automated secured entry systems, the invention does not prevent the practice of "tailgating," where another person follows the one who has been authorized to enter the doorway. This problem can be addressed in other ways, such as by sounding an alarm upon the detection of multiple entries, using photo-detectors or similar devices.

The fingerprint correlator 46 performs the matching function very rapidly by using special-purpose hardware in the form of an application-specific integrated circuit (ASIC), which employs a high degree of parallel processing to search an entire fingerprint image for instances of distinctive reference features that have been previously stored in the fingerprint database 44. A specific form of the fingerprint correlator that can achieve the desired speed of matching is disclosed in a patent application by Bruce W. Evans et al., entitled "Fingerprint Feature Correlator," filed concurrently with this application. The Evans et al. patent application is hereby incorporated by reference into this specification. A correlator constructed in accordance with the principles described in the Evans et al. specification is capable of verifying a user's identity in less than a second, and closer to half a second if only one reference fingerprint image has to be compared with a sensed fingerprint image

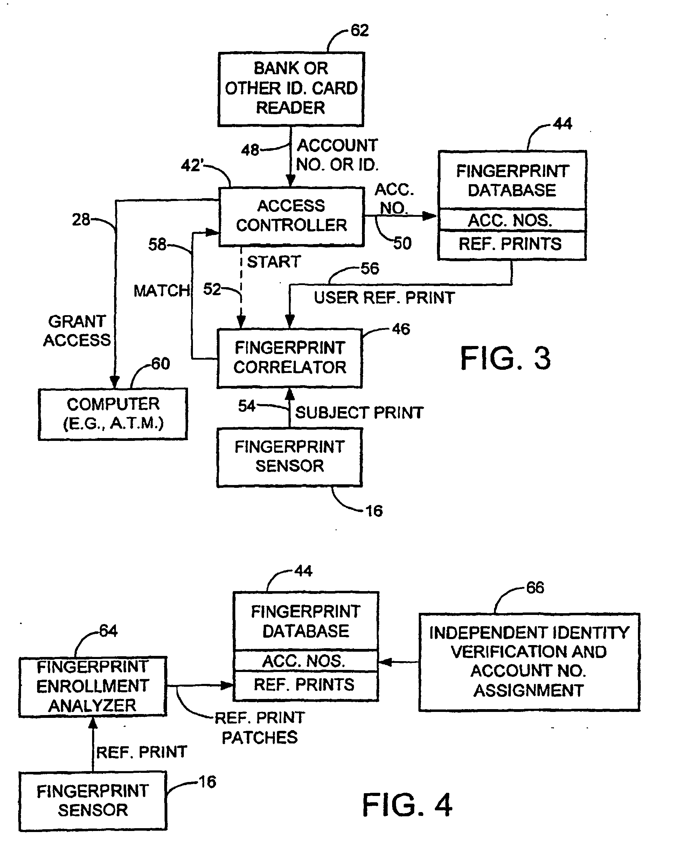

FIG. 3 is a diagram similar to FIG. 2, but showing the principal components of a system used to access a computer 60, such as a bank automatic teller machine (ATM). Instead of the door controller 42, the corresponding component in FIG. 3 is an access controller 42', and instead of the polling transceiver 40 this system has a bank card reader 62 or a similar device for reading some type of identification card. The card may be encoded with data using a magnetic stripe, bar codes, or any other means. Alternatively, the card may be a "smart card" that includes an electronically readable memory. The user places his or her card in the reader 62, which retrieves an account number or other type of identification unique to the user, and passes this data to the access controller 42' over line 48. As in the door entry system of FIG. 2, the access controller 42' uses the account number, on line 50, to access the fingerprint database 44 and obtain a user reference fingerprint on line 56 from the database. The controller 42' also sends a "start" signal on line 58 to the fingerprint correlator 46, which compares the reference fingerprint with a subject fingerprint image supplied from the sensor 16 over line 54. If the correlator 46 finds a match, the correlator sends a signal over line 58 to the access controller 42', which transmits an appropriate signal to the computer 60 on line 28, indicating that access has been granted. In the case of an ATM machine, the computer 60 initiates a dialog with the user, who may then conduct banking transactions, such as cash withdrawal or deposit transactions. If the computer 60 is for some non-banking purpose, the grant of access may be for any defined purpose, such as the authorization to read from or write to files under control of the computer.

In the machine access application of the invention, the use of fingerprint matching in conjunction with a conventional bank card or other identification card provides a higher level of security without the need to memorize secret codes or passwords. Door or building access using the technique of the invention has the same general advantage: a higher level of security, without the need for secret codes or passwords, and yet without sacrificing speed or convenience or access. When used in conjunction with automatic badge sensing systems, like RF-ID, the invention provides high security with virtually no inconvenience or delay to the user. If "smart card" technology is used for door or machine access, the card may also be used to store fingerprint reference data for the user. Fingerprint matching at the door or machine would then match the sensed fingerprint image with fingerprint reference data read from the user's card. The need to maintain potentially large fingerprint databases at the door would then be avoided.

FIG. 4 illustrates an enrollment procedure that is required for any of the configurations described above. It has been assumed in the foregoing description that the fingerprint database 44 contains reference fingerprint image data for each user, employee, or customer using the system, and that the reference fingerprint data are associated with corresponding user numbers, or employee or customer account numbers. The enrollment procedure requires that each user enroll by presenting a finger to the fingerprint sensor 16, which generates a fingerprint image for a fingerprint enrollment analyzer 64. At the same time, the user's identity has to be independently verified, by some means other than fingerprint matching, as indicated in block 66, and the user also presents an account number, employee number or similar identity number. If the user does not have such a number, one is assigned at this stage. The account number is stored in the database 44 in association with the user's fingerprint image data. The fingerprint correlator 46 described in the patent specification of Bruce W. Evans et al. referred to above, also includes an analysis section that extracts distinctive features from a fingerprint image, in the form of reference "patches" of the image that contain one or more distinctive bifurcations of ridges or valleys in the fingerprint image. In the system of the present invention, it is these reference patches, and their positions, that are stored in the fingerprint database 44, or directly on the user's identification card, if "smart card" technology is used, for later retrieval and use in the correlator 46.

It will be appreciated from the foregoing that the present invention represents a significant advance in the field of automatic security systems controlling access to buildings or machines. In particular, the combination of an identity medium, such as a badge or card, to identify the user, and fingerprint matching to verify the identity, results in a highly secure but highly convenient approach to access control. It will also be appreciated that, although specific embodiments of the invention have been described in detail for purposes of illustration, various modifications may be made. Accordingly, the invention should not be limited except as by the appended claims.

## Claims

1. A system for controlling access to a door, the system comprising:
means for inputting a preliminary identification of a user of the system;
a fingerprint database containing reference fingerprint data for the user; means for retrieving from the fingerprint database reference fingerprint data corresponding to the preliminary identification of the user;
a fingerprint sensor integrated into the door for generating a subject fingerprint of the user prior to granting access; and
a fingerprint correlator for comparing the subject fingerprint image with the retrieved reference fingerprint data, and generating a match signal if there is a match to within a desired degree of accuracy;
wherein the match signal is used to grant access to the door or machine.

2. A system as defined in claim 1, wherein the fingerprint sensor is a push plate on an inwardly opening door.

3. A system as defined in claim 1, wherein the fingerprint sensor is located beneath a pull handle on an outwardly opening door.

4. A system as defined in any of the preceding claims, wherein:
the means for inputting a preliminary identification includes means for reading an identification medium carried by each user and having a transponder capable of transmitting identification data in response to receipt of a polling signal; and
the means for reading an identification medium includes a polling transceiver for sending polling signals periodically and receiving any response signals from a transponder carried by a user approaching the door.

5. A system as defined in any claims 1 to 3, wherein:
each user carries a machine readable card; and
the means for inputting a preliminary identification includes a card reader capable of reading the machine readable card to extract preliminary identification data.

6. A system as defined in any of the preceding claims, wherein:
the system provides access to a secured building; and
the system further comprises a door release actuator triggered by the match signal.

7. A method for controlling access to a door, the method comprising:
reading preliminary identification data supplied by a user seeking access via a fingerprint sensor integrated into the door;
sensing the user's fingerprint prior to granting access, and generating a subject fingerprint image;
retrieving from a fingerprint database reference fingerprint data corresponding to the preliminary identification data;
comparing the reference fingerprint data with the subject fingerprint image to verify the preliminary identification data and, if there is match, generating a match signal; and
granting access to the door if a match signal is generated.

8. A method as defined in claim 7, wherein:
the step of reading preliminary identification data includes transmitting a polling signal to a transponder carried by the user, receiving the polling signal in the transponder, transmitting from the transponder a reply that includes user identification data.

9. A method as defined in claim 7, wherein:
each user carries a machine-readable card; and
the step of reading preliminary identification data includes reading data from a card reader in which the machine-readable card is placed by the user.

10. A method as defined in any of claims 7 to 9, wherein:
the method provides access to a protected building; and
the step of granting access includes unlocking the door.

11. A method as defined in any of claims 7 to 10, further comprising the step of:
providing the fingerprint sensor on a push plate on an inwardly opening door.

12. A method as defined in any of claims 7 to 10, further comprising the step of:
providing the fingerprint sensor beneath a pull handle on an outwardly opening door.

## Patentansprüche

1. System zum Steuern des Zugangs zu einer Türe, wobei das System umfasst:
- eine Einrichtung zum Eingeben einer vorläufigen Identifikation eines Benutzers des Systems;
- eine Fingerabdruckdatenbank, die Referenzfingerabdruckdaten für den Benutzer enthält;
- eine Einrichtung zum Wiedererlangen von Referenzfingerabdruckdaten, die der vorläufigen Identifikation des Benutzers entsprechen, aus der Fingerabdruckdatenbank;
- einen in die Türe integrierten Fingerabdrucksensor zum Erzeugen eines persönlichen Fingerabdrucks des Benutzers vor dem Gewähren des Zugangs, und
- einen Fingerabdruckkorrelator zum Vergleichen des persönlichen Fingerabdruckbildes mit den wiedergewonnenen Referenzfingerabdruckdaten und zum Erzeugen eines Übereinstimmungssignals, wenn dabei eine Übereinstimmung in einem gewünschten Genauigkeitsgrad vorliegt,
- wobei das Übereinstimmungssignal verwendet wird, um den Zugang zu der Türe oder Maschine zu gewähren.

2. System nach Anspruch 1, bei dem der Fingerabdrucksensor eine Druckplatte an einer sich nach innen öffnenden Türe ist.

3. System nach Anspruch 1, bei dem sich der Fingerabdrucksensor unterhalb eines Ziehgriffs an einer sich nach außen öffnenden Türe befindet.

4. System nach einem der vorhergehenden Ansprüche, bei dem:
- die Einrichtung zum Eingeben einer vorläufigen Identifikation eine Einrichtung zum Auslesen eines Identifikationsmediums umfasst, das von jedem Benutzer getragen wird und einen Transponder aufweist, der in Antwort auf den Empfang eines Abfragesignals Identifikationsdaten übertragen kann, und
- die Einrichtung zum Auslesen eines Identifikationsmediums einen Abfragetransceiver zum periodischen Senden von Abfragesignalen und zum Empfangen jeglicher Antwortsignale von einem Transponder umfasst, der von einem sich der Türe nähernden Benutzer getragen wird.

5. System nach einem der Ansprüche 1 bis 3, bei dem:
- jeder Benutzer eine maschinenlesbare Karte trägt; und
- die Einrichtung zum Eingeben einer vorläufigen Identifikation ein Kartenlesegerät umfasst, das die maschinenlesbare Karte lesen kann, um vorläufige Identifikationsdaten zu erlangen.

6. System nach einem der vorhergehenden Ansprüche, bei dem:
- das System für einen Zugang zu einem gesicherten Gebäude sorgt; und
- das System ferner einen von dem Übereinstimmungssignal (28) ausgelösten Türfreigabeaktuator umfasst.

7. Verfahren zum Steuern des Zugangs zu einer Türe, wobei das Verfahren umfasst:
- Lesen vorläufiger Identifikationsdaten, die von einem den Zugang wünschenden Benutzer mittels eines in die Türe integrierten Fingerabdrucksensors bereitgestellt werden;
- Erfassen des Fingerabdrucks des Benutzers vor Gewähren des Zugangs und Erzeugen eines persönlichen Fingerabdruckbildes,
- Wiedergewinnen von den vorläufigen Identifikationsdaten entsprechenden Referenzfingerabdruckdaten aus einer Fingerabdruckdatenbank;
- Vergleichen der Referenzfingerabdruckdaten mit dem persönlichen Fingerabdruckbild, um die vorläufigen Identifikationsdaten zu verifizieren und, wenn Übereinstimmung vorliegt, Erzeugen eines Übereinstimmungssignals; und
- Gewähren des Zugangs zu der Türe wenn ein Übereinstimmungssignal erzeugt wird.

8. Verfahren nach Anspruch 7, bei dem:
- der Schritt des Lesens vorläufiger Identifikationsdaten ein Übermitteln eines Abfragesignals zu einem vom Benutzer getragenen Transponder, ein Empfangen des Abfragesignals in dem Transponder, ein Übertragen einer die Benutzeridentifikationsdaten umfassenden Antwort von dem Transponder umfasst.

9. Verfahren nach Anspruch 7, bei dem:
- jeder Benutzer eine maschinenlesbare Karte trägt, und
- der Schritt des Lesens vorläufiger Identifikationsdaten ein Lesen von Daten von einem Kartenlesegerät umfasst, in dem die maschinenlesbare Karte vom Benutzer platziert wird.

10. Verfahren nach einem der Ansprüche 7 bis 9, bei dem:
- das Verfahren für einen Zugang zu einem geschützten Gebäude sorgt; und
- der Schritt, den Zugang zu gewähren, ein Entriegeln der Türe umfasst.

11. Verfahren nach einem der Ansprüche 7 bis 10, das weiterhin den Schritt umfasst:
- Vorsehen des Fingerabdrucksensors an einer Druckplatte an einer sich nach innen öffnenden Türe.

12. Verfahren nach einem der Ansprüche 7 bis 10, das weiterhin den Schritt umfasst:
- Vorsehen des Fingerabdrucksensors unterhalb eines Ziehgriffs an einer sich nach außen öffnenden Türe.

## Revendications

1. Un système pour commander l'accès à une porte, le système comprenant:
un moyen pour introduire une identification préliminaire d'un utilisateur du système;
une base de données d'empreintes digitales contenant des données d'empreinte digitale de référence pour l'utilisateur;
un moyen pour extraire de la base de données d'empreintes digitales des données d'empreinte digitale de référence correspondant à l'identification préliminaire de l'utilisateur,
un capteur d'empreintes digitales intégré à la porte pour générer une empreinte digitale sujet de l'utilisateur avant d'accorder l'accès; et
un corrélateur d'empreintes digitales pour comparer l'image de l'empreinte digitale sujet avec les données d'empreinte digitale de référence extraites, et pour générer un signal de concordance s'il y a une concordance dans les limites d'un degré d'exactitude désiré;
dans lequel le signal de concordance est utilisé pour accorder l'accès à la porte ou la machine.

2. Un système défini dans la revendication 1, dans lequel le capteur d'empreintes digitales est une plaque de propreté sur une porte s'ouvrant vers l'intérieur.

3. Un système défini dans la revendication 1, dans lequel le capteur d'empreintes digitales est placé au-dessous d'une poignée de traction sur une porte s'ouvrant vers l'extérieur.

4. Un système défini dans l'une quelconque des revendications précédentes, dans lequel :
le moyen pour introduire une identification préliminaire comprend un moyen pour lire un support d'identification porté par chaque utilisateur et ayant un répondeur capable d'émettre des données d'identification sous l'effet de la réception d'un signal d'interrogation; et
le moyen pour lire un support d'identification comprend un émetteur-récepteur d'interrogation pour émettre périodiquement des signaux d'interrogation et recevoir des signaux de réponse éventuels provenant d'un répondeur porté par un utilisateur qui s'approche de la porte.

5. Un système défini dans l'une quelconque des revendications 1 à 3, dans lequel :
chaque utilisateur porte une carte lisible par une machine; et
le moyen pour introduire une identification préliminaire comprend un lecteur de cartes capable de lire la carte lisible par une machine, pour extraire des données d'identification préliminaires.

6. Un système défini dans l'une quelconque des revendications précédentes, dans lequel :
le système donne accès à un bâtiment à accès contrôlé; et
le système comprend en outre un actionneur d'ouverture de porte déclenché par le signal de concordance.

7. Un procédé pour commander l'accès à une porte, le procédé comprenant les étapes suivantes :
on lit des données d'identification préliminaire fournies par un utilisateur demandant l'accès, par l'intermédiaire d'un capteur d'empreintes digitales intégré à la porte;
on détecte l'empreinte digitale de l'utilisateur avant d'accorder l'accès, et on génère une image d'empreinte digitale sujet;
on extrait d'une base de données d'empreintes digitales des données d'empreinte digitale de référence correspondant aux données d'identification préliminaire;
on compare les données d'empreinte digitale de référence avec l'image d'empreinte digitale sujet pour vérifier les données d'identification préliminaire et, s'il y a concordance, on génère un signal de concordance; et
on accorde l'accès à la porte si un signal de concordance est généré.

8. Un procédé défini dans la revendication 7, dans lequel :
l'étape de lecture de données d'identification préliminaire comprend l'émission d'un signal d'interrogation vers un répondeur porté par l'utilisateur, la réception du signal d'interrogation dans le répondeur, et l'émission par le répondeur d'une réponse qui contient des données d'identification d'utilisateur.

9. Un procédé défini dans la revendication 7, dans lequel :
chaque utilisateur porte une carte lisible par une machine; et
l'étape de lecture de données d'identification préliminaire comprend la lecture de données à partir d'un lecteur de cartes dans lequel la carte lisible par une machine est placée par l'utilisateur.

10. Un procédé défini dans l'une quelconque des revendications 7 à 9, dans lequel :
le procédé donne accès à un bâtiment protégé; et
l'étape consistant à accorder l'accès comprend le déverrouillage de la porte.

11. Un procédé défini dans l'une quelconque des revendications 7 à 10, comprenant en outre l'étape consistant à :
installer le capteur d'empreintes digitales sur une plaque de propreté sur une porte s'ouvrant vers l'intérieur.

12. Un procédé défini dans l'une quelconque des revendications 7 à 10, comprenant en outre l'étape consistant à :
installer le capteur d'empreintes digitales au-dessous d'une poignée de traction sur une porte s'ouvrant vers l'extérieur.
